# EUROPEAN PATENT APPLICATION

(11) **EP 2 479 451 A1**
(43) Date of publication of application: **25.07.2012**
(21) Application number: 10814828.9
(22) Date of filing: 14.09.2010
(51) Int. Cl.: F16F 1/12, E05D 13/00, E05F 1/00, F16F 3/04, E05D 15/00

(54) **METHOD FOR FASTENING AN END SECTION OF A CYLINDRICAL SPRING, A FASTENER (EMBODIMENTS), A SPRING UNIT AND VERTICAL-LIFT SECTIONAL GATES**

(30) Priority: 14.09.2009 EA 200901357
(71) Applicant: Alutech Doors Systems LLC, Minsk, Minskaya obl. 220075 (BY)
(72) Inventor: SKURATOVICH, Viktor Aleksandrovich, Minsk 220090 (BY); RADETSKYJ, Aleksej Aleksandrovich, Smilovichi Chervenskiy raion Minskaya obl. 223216 (BY)
(74) Representative: Lukaszyk, Szymon
(86) International application number: PCT/BY2010/000006
(87) International publication number: WO 2011/029171

(57) **Abstract**

The claimed invention refers to springs and spring cartridges, in particular to fixation of the end sections of the coil spring by means of the fixing devices of a special construction which can be applied for the simultaneous fixation of more than one spring while producing a spring cartridge from the coaxially positioned coil tension springs. It is provided a fixing device of the spring end section in two variants of implementation, which is made as a composite device and including a hollow and open from both ends body, a central axial element comprising the central part, the dimensions of the cross-section of which in the direction of the central axial element axis are changing according to the linear law, and two end sections having constant cross-section, one of which has the less dimensions of cross-section, the other has the bigger dimensions of cross-section, and an end support positioned from the side of the end section having the bigger dimensions of cross-section, and at least two fixing elements, each representing a plate stretched in the direction of the central axial element axis, a bearing cap constructed with the possibility of installation on the open end of the body from the opposite side to the end support of the central axial element, and an element of regulation and fixation of the axial position of the central axial element in the body cavity, at least one support and at least one hook end (in the second variant of implementation, at least one pair of the hook ends of different height) projecting beyond the external surface being placed on the external surface of each fixing element and the corresponding apertures being made in the hollow body.

It is also provided a spring cartridge comprising two fixing devices of the above mentioned design and the overhead sectional doors, supplied with a balance device comprising the said spring cartridge.

## Description

The claimed invention refers to springs and spring cartridges, in particular to the method of fixation of the end section in the coil spring using fixing devices of a special construction which can be applied also for the simultaneous fixation of more than one spring while producing a spring cartridge from the coaxially positioned coil tension springs. The invention further refers to spring cartridges comprising at least two coaxially positioned coil tension springs which have special fixing devices on their ends. Moreover, the invention further refers to overhead sectional doors the balance unit structure of which includes the balance system having a spring cartridge of a claimed design.

In different fields there is a problem of a simple and reliable fixation of the end sections of coil springs, in particular of tension springs. This problem arises more evidently when we deal with coordinate fixation of coaxially positioned coil tension springs of the "spring-in-spring" type spring cartridges observing their coaxiality.

A great number of methods and fixing devices for fixing the end sections of single coil tension springs is known.

Thus, a method of fixing a coil spring, wherein the end nonaxis spring coil is wound on a screw hook end, before the winding this spring coil is stretched to the pitch of the screw hook end with an effort excluding the spring damage [1] is known. In this method, the screw hook end, functioning as a fixing device requiring a special design depending on the pitch of coils for each definite spring. Moreover, while assembling the spring cartridge, comprising a spring and at least one screw hook end (fixing device), one has to make considerable but not exceeding the stated efforts of stretching to the spring. Taking into account these peculiarities any damage of at least one element of the spring cartridge requires its full replacement, because it is impossible to replace the spring from the screw hook end without damaging all elements of the spring cartridge.

There is also known a device for fixing the end of the coil spring as well as for regulating the spring tension, comprising a plate with two rows of apertures positioned at a distance approximately equal to the diameter of the spring coils [2]. The plate comprises the central cylindrical part and two opposite adjacent to the central part flat parts, on which the rows of the apertures are designed. The apertures of one row being shifted relative to the apertures of the other row to make possible gradual catching of the end spring coils with the apertures. The plate is also supplied with a device for catching and blocking which has a threaded rod with a hook on one end. The threaded rod is screwed up into the internal thread made in the cylindrical side of the plate the axis of which is parallel to the spring axis. The mentioned device enabling the fixing of the end sections of the spring provides quite a simple regulation of the spring tension due to screwing/unscrewing of the threaded rod relative to the internal thread of the cylindrical part. However, it has quite a difficult geometric pattern and assumes a hard method of spring fixing requiring the accurate gradual "moving" of the end spring part through all apertures of the flat areas of the plate. Thus the process of spring replacement becomes difficult.

There is also known a device for fixing the end of the coil tension spring designed as a solid fixing mechanism with the acute angle in its upper part and with three jags along its axis. The jags have guiding and fixing surfaces shifted on the axis of the fixing device [3]. The angle between the fixing surface and the axis of the fixing device must not exceed 90°. Using this fixing device it is quite simple and reliable to form the spring cartridge by fixing the end sections of the spring and "moving" the fixing device inside the coil spring in the direction of its axis. However, it has quite a difficult geometric pattern. Moreover, it is necessary to use different fixing devices for springs with various internal diameters. Design peculiarities of jags positioning of the fixing device practically eliminate the possibility of simple replacement of the spring.

Apart from the above mentioned defects of fixing appearing while using the described fixing devices it should be noticed that it is impossible to fix two and more coaxially positioned coil tension springs. One also should mention the necessity of the mechanism complete replacement in case of damage of even one element which considerably increases the cost of technical support and/or spring cartridges renewal.

At the same time there are technical solutions where spring cartridges consisting of at least two coaxially positioned coil tension springs are used. In particular such solutions are applied in modern constructions of sectional overhead (rising) doors where instead of one coil torsion spring for closing the doors there are devices with tension springs which as a rule are situated either under or above horizontal tracks. However such constructions increase the necessity in the volume in the direction of the ceiling in particular of the garage; otherwise the side volume under the horizontal tracks is limited.

Particularly, there is another of fixing the end sections of two coaxially positioned coil springs, described in the construction of overhead sectional doors and their balance system [4]. Thus overhead sectional doors are described as a construction consisting of several panels consecutively positioned and connected with hinges. The panels are installed so that they could be moved and directed on a definite trajectory between the horizontal and vertical positions with the help of side rollers. Doors are supplied with balance system comprising spring cartridge which is a device consisting of horizontally directed coil tension springs. Each spring has its one end installed in the building (the end is directed from the door passage). The other end is connected with a guiding roller (the end is directed to the door passage). The roller is used to move the rope which is held in a fixed position in the building. At the same time each second rope end is fixed in definite points positioned on both sides of the bottom panel edge when the doors are closed. The described doors have a spring cartridge situated in each directed one from another outer side parts of horizontal areas of side tracks. It includes one or several blocks positioned one under another and parallel one to another. The blocks contain tension springs which have at least two coaxially positioned coil tension springs, the inner spring has the less outer diameter than the inner diameter on the coil corresponding to the outer spring. At the same time one spring has the left-side coiling in one and the same axial direction, the other spring has the right-side coiling, as a result the coiling of both springs are crossing. Such a construction has a higher reliability. In the description with the reference to the drawings there is a detailed overview of the methods of fixation and the corresponding fixing devices for end sections of both springs including in one spring cartridge. The way of fixing of end sections of the springs and the corresponding fixing devices are similar with the description in the source [3], except for the jags of the fixing device which have a different shape and height to provide the possibility of simultaneous fixing of springs with different diameters. The production of such cartridges is quite difficult (taking into account the necessity of observing their coaxiality and installation). The process of elements replacement in such a cartridge is more difficult than those described in the above mentioned cases which results in its complete replacement. At the same time technical solutions on such a spring cartridge and overhead sectional doors can be viewed as the most similar to the corresponding objects of invention concerning the number of attributes.

In all other descriptions of balance systems in overhead sectional doors the methods of fixing of end sections of tension springs are not viewed. On the technical level there are no similar ways of fixing for end sections of coil tension springs as well as fixing devices similar to the claimed construction.

Therefore, the aim of the invention is to work out a simple convenient and reliable method of fixation of the end sections of the coil spring and corresponding fixing device for the end section of the coil tension spring which will provide quick, simple and safe mounting of a spring cartridge, including spring cartridges comprising coaxially positioned coil springs, as well as the possibility of their quick and simple dismantling for the replacement of certain elements.

The claimed aim is realized with the help of the method of fixing the coil spring end section whereby the fixing device is freely positioned inside the coil of the spring in its end section area, the fixing device comprising at least two fixing elements, each of which is supplied with at least one support and at least one hook end so that the spring end position could be fixed with the supports of the fixing elements and extended perpendicularly to the spring longitudinal axis until the hook ends of the fixing elements project between the spring coils, expanding them with the subsequent fixation of the relative position of the fixing elements.

The claimed method allows to solve the problems of fixation of springs of different diameters in a spring cartridge as well as the problem of its dismantling for repair and /or renewal.

To perform the above mentioned method the authors have worked out the corresponding construction of the fixing device in different variants for a spring cartridge with one coil tension spring and for a spring cartridge with at least two coaxially positioned coil tension springs.

Thus, the claimed aim is realized also with the help of the fixing device for the end section of the spring in the first variant performed as a composite device including hollow and open from both ends body, maximal size of the cross-section end of which is less than internal diameter of the spring, central axial element comprising the central part, dimensions of the cross-section end of which are changing in the direction of the central axial element axis according to the linear law, and two end sections having constant cross-section, one of which has the less dimensions of cross-section, corresponding to the dimensions of the smallest cross-section of the central part and the other has the bigger dimensions of cross-section, corresponding to the dimensions of the biggest cross-section of the central part, and end support positioned from the side of the end section having the bigger dimensions of cross-section and performed with the possibility of supporting in the axis position on the open end of the body, the total length of the part having the bigger dimensions of cross-section and the central part of the central axial element correspond to the body length, at least two fixing elements, each is a plate stretched in the direction of the axis of the central axial element, bearing cap constructed with the possibility of installation on the open body end from the opposite side to the end support of the central axial element, and the element of regulation and fixing of the axial position of the central axial element inside the body. At the same time the number of fixing elements and their width is chosen with the possibility of at least partial cover of the central axial element in the end area having the bigger dimensions of cross-section. On the external surface of the fixing element there is at least one support and at least one hook end overhanging above the external surface. There are apertures in the hollow body with a shape and size chosen for placing in them supports and hook ends of the fixing elements. The shape and size of the end section of the area having the bigger dimensions of cross-section of the central axial element and the height of the supports and hook ends of the fixing elements are chosen with the possibility of their overhanging between the corresponding apertures in the body outside the external surface of the body in the axis position, providing the possibility of interconnection between hook ends and spring coils.

Thus, due to availability of changing the distance (increasing/decreasing) between separate fixing elements and the distance between the hook ends placed on the fixing elements there is a possibility of fixing the end sections of the springs having different diameters and dismantling the fixing device from the end spring section.

In the second variant the claimed aim is realized with the help of the described fixing device used in spring cartridge consisting of coaxially positioned internal and external springs performed being composite and including hollow and open from both ends body, maximal size of the cross-section end of which is less than internal diameter of the spring, central axial element comprising the central part, dimensions of the cross-section end of which are changing in the direction of the central axial element axis according to the linear law, and two end sections having constant cross-section, one of which has the less dimensions of cross-section, corresponding to the dimensions of the smallest cross-section of the central part and the other has the bigger dimensions of cross-section, corresponding to the dimensions of the biggest cross-section of the central part, and end support positioned from the side of the end section having the bigger dimensions of cross-section and performed with the possibility of supporting in the axis position on the open end of the body, the total length of the part having the bigger dimensions of cross-section and the central part of the central axial element correspond to the body length, at least two fixing elements, each representing a plate stretched in the direction of the axis of the central axial element, bearing cap constructed with the possibility of installation on the open body end from the opposite side to the end support of the central axial element, and the element of regulation and fixing of the axial position of the central axial element inside the body. At the same time the number of fixing elements and their width is chosen with the possibility of at least partial cover of the central axial element in the end area having the bigger dimensions of cross-section. On the internal surface of the fixing element there is at least one support and at least one pair of hook ends of various. The higher hook end is placed closer to the support in the lengthwise direction than the smaller hook end. There are apertures in the hollow body with a shape and size chosen for placing in them supports and hook ends of the fixing elements. The shape and size of the end section of the area having the bigger dimensions of cross-section of the central axial element and the height of the supports and hook ends of the fixing elements are chosen with the possibility of their overhanging between the corresponding apertures in the body outside the external surface of the body in the axis position, providing the possibility of interconnection of higher hook ends with the coils of the external spring and the smaller hook ends with the coils of the internal spring.

In general any geometric pattern of cross-section of the body and the central axial element can suit. The most suitable variant presupposes round cross-section of the central and both end sections of the body and the central axial element. If required the plate of each fixing element is manufactured with a curl in the crosswise direction, the bending radius is preferred to coincide with the cross-section radius of the end section having the bigger dimensions of cross-section of the central axial element.

In the preferred embodiments of the fixing device in the second variant the support and the pair of the hook ends of the fixing element are positioned on one lengthwise line which ensures a simpler installation of the support and the hook ends into the apertures of the body.

In the preferred embodiments of the claimed fixing device the element of regulating and fixing of the axial position of the central axial element in the body is performed in the shape of a nut, the end section having the smaller dimensions of cross-section of the central axial element has a thread. It ensures the possibility of smooth regulation of the position of the central axial element inside the body and gradual entering of the hook ends into the spring coils. However, in other ways of performance there can be used other possible forms of the element for regulating and fixing.

In the second variant of fixing element implementation the process of installation of the supports and the hook ends of the fixing element becomes even simpler. There the apertures in the body for each pair of the hook ends of the fixing element are made as a general cut positioned parallel to the axis of the central axial element.

Another subject of the invention is a spring cartridge comprising coaxially positioned internal and external springs and two fixing devices for end sections of the springs. The claimed aim is realized in the following way: each fixing device of the end sections of the springs include complete and open from both ends body with apertures. In the body there is a central axial element comprising the central part dimensions of the cross-section end of which are changing in the direction of the central axial element axis according to the linear law and two end sections having constant cross-section, one of which has the less dimensions of cross-section, corresponding to the dimensions of the smallest cross-section of the central part and the other has bigger dimensions of cross-section, corresponding to the dimensions of the biggest cross-section of the central part, and end support positioned from the side of the end section having the bigger dimensions of cross-section and thrusted on the open end of the body, at least two fixing elements positioned between the external surface of the end section of the central axial element having the bigger dimensions of cross-section and internal surface of the body. Each element is a plate stretched in the direction of the central axial element axis. On the external surface of the fixing element there is at least one support and at least one pair of the hook ends of different height overhanging above the external surface. The hook ends overhang through the corresponding apertures in the body. The higher hook end in the lengthwise direction is situated closer to the support than the smaller hook end and is positioned between the coils of the external spring. The smaller hook end is positioned between the coils of the internal spring. The end section having the smaller dimensions of cross-section of the central axial element overhangs the body, on the open end of the body from the opposite side to the end support of the central axial element there is a bearing cap, at the end section having the smaller dimensions of cross-section of the central axial element there is an element connected with the cap. This is the element for regulating and fixing of the axial position of the central axial element inside the body.

In the preferred embodiments of the claimed spring cartridge the element of regulating and fixing of the axial position of the central axial element in the body is performed in the shape of a nut pressed to the bearing cap. The end section having the smaller dimensions of cross-section of the central axial element has a thread.

Another subject of the invention is overhead sectional doors supplied with a balance system comprising at least one spring cartridge of spring mechanism, one end of which is connected with the movable transmission block comprising at least one pulley. The other end is connected with the device of tension regulation. This device comprises the anchor hook end constructed with the possibility of its fixing in each aperture in the row positioned in the direction of the spring cartridge extension. The mentioned aim is realized in the following way: balancing device is positioned vertically, the spring mechanism comprises spring cartridge with above mentioned fixing devices, in the spring cartridge the end section having the smaller dimensions of cross-section of the central axial element of one fixing device is connected with the movable transmission unit positioned at the top, the end section having the smaller dimensions of cross-section of the central axial element of the other fixing device is connected with the unit of tension regulation positioned at the bottom. The fixing apertures are made in vertically positioned laid-on plate supplied with apertures for the fixing elements.

In the preferred embodiments of the claimed sectional doors the movable transmission unit comprises at least one pulley positioned on U-shaped bracket which has an installation aperture on the strap and which is connected with the end section having the smaller dimensions of cross-section of the central axial element of the corresponding fixing device. The end section in positioned in the installation aperture and fixed with threaded connection - preferably using a nut and a lock-nut installed on the end section with the thread from the side of the opposite surfaces of the strap of the bracket. Such a form of the movable transmission unit being the simplest for production, installation and usage does not eliminate the possibility of application of other forms of the movable transmission unit.

Also in the preferred embodiments of the claimed sectional doors the tension regulation unit is constructed as a bracket of L-shaped form. One of the webs of the bracket has an installation aperture which is connected with the end section having the smaller dimensions of cross-section of the central axial element of the corresponding fixing device. The end section in positioned in the installation aperture and fixed with threaded connection - preferably using a nut and a lock-nut installed on the end section with the thread from the side of the opposite surfaces of the web with the installation aperture. The second web of the bracket is positioned parallel to the axis of the central axial element of the fixing device and has at least one hook end positioned from the side of the laid-on plate and at least one aperture for fixing elements corresponding at least to one aperture for fixing elements of the laid-on plate. Such form of producing the unit of tension regulation is maximally simple and convenient. At the same time other forms are possible.

The above described advantages of the claimed invention in general and each element in particular will be examined in detail further on the examples of some preferable but not limited forms of implementation with references to the drawings which schematically show the invention:
Fig. 1 general view (in details) of the claimed fixing device for the end sections of coaxially positioned springs;
Fig. 2 general view of the claimed fixing device in Fig. 1 assembled;
Fig. 3 initial position of the fixing device in Fig. 1 and two fixed springs with the plan of further way of assembling (fixing);
Fig. 4 general view of the claimed overhead doors (with partial cut);
Fig. 5 general view of the claimed spring cartridge included in the spring mechanism of overhead doors in Fig. 1;
Fig. 6a)-b) general view of the fragment in Fig. 4 in the expanded scale, illustrated the installation of the tension regulation unit.

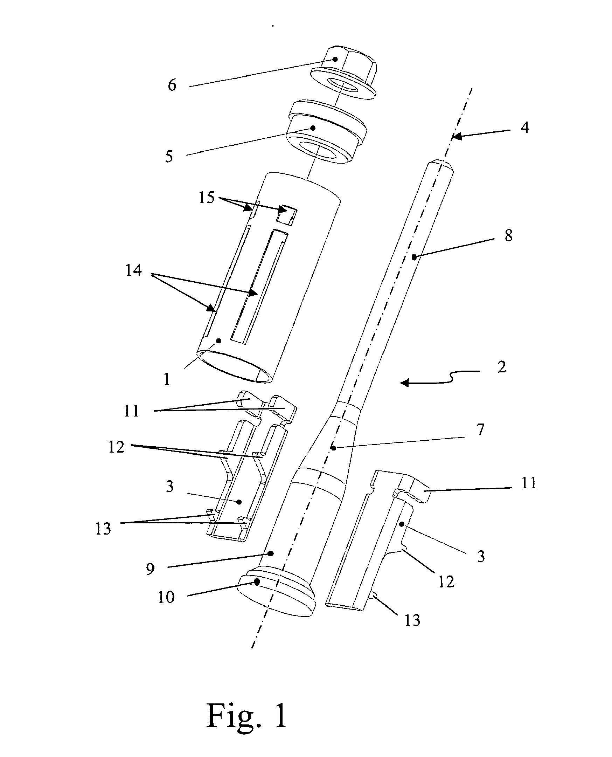

Fig. 1 schematically shows the general view of the claimed compound fixing device for the end sections of two coaxially positioned springs (in details), consisting of hollow and open from both sides body 1, central axial element 2, two (in this form of implementation) fixing elements 3, each of these elements representing a plate stretched in the direction of the central axial element 2 axis 4, a bearing cap 5 and the element for regulating and fixing of the axial position of the central axial element in the body, constructed in this form of implementation as a nut 6.

The central axial element 2 comprises the central part 7, the dimensions of cross-section of the central part in the direction of the axe 4 of the central axial element change according to the linear law, and two end sections 8 and 9 with the constant cross-section, one of which (8) one of which has the less dimensions of cross-section, corresponding to the dimensions of the smallest cross-section of the central part 7, the other one (9) has the bigger dimensions of cross-section, corresponding to the dimensions of the biggest cross-section of the central part 7, and the end support 10, positioned from the side of the end section 9 having the bigger dimensions of cross-section and performed with the possibility of supporting in the axis position on the open end of the body 1. The total length of the part 9 having the bigger dimensions of cross-section and the central part 7 of the central axial element 2 corresponds to the length of the body 1.

The number of fixing elements 3 and their width is chosen with the possibility of at least partial cover of the central axial element 2 in the end area 9 having the bigger dimensions of cross-section. On the external surface of the fixing element 3 there are two (in this form of implementation) supports 11 and two (in this form of implementation) pairs of the hook ends of different height: 12 higher and 13 smaller. In the hollow body 1 in the lengthwise direction there are apertures 14, common for each pair of the hook ends 13 and 14 and apertures 15 for the supports 11.

The bearing cap 5 is manufactured with the possibility of installation on the open end of the body 1 from the side opposite to the end support 10 of the central axial element 2.

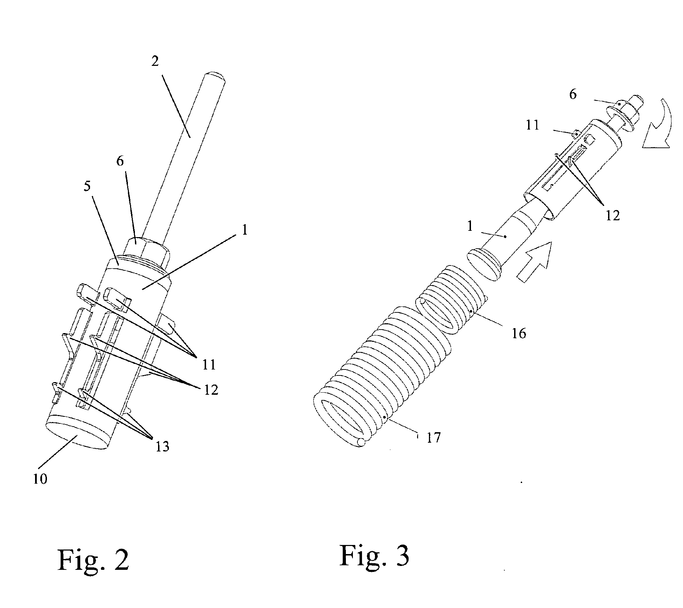

Fig. 2 schematically shows the general view of the claimed assembled fixing device in Fig. 1, when the central axial element 2 with the fixing devices 3 is positioned in the hollow body 1 and limited from one side with the end support 10 of the central axial element 2, and from the other side - with the bearing cap 5, fixed with the nut 6. Through the apertures 14 of the body 1 above the surface of the body the hook ends 12 and 13 overhang, through the apertures 15 - the supports 11.

Fig. 3 schematically shows the initial position of the fixing device in Fig. 1 and two fixed springs: 16 having the smaller diameter and 17 having the bigger diameter, the arrows show the further action on assembling (fixing), this section will be described in details later.

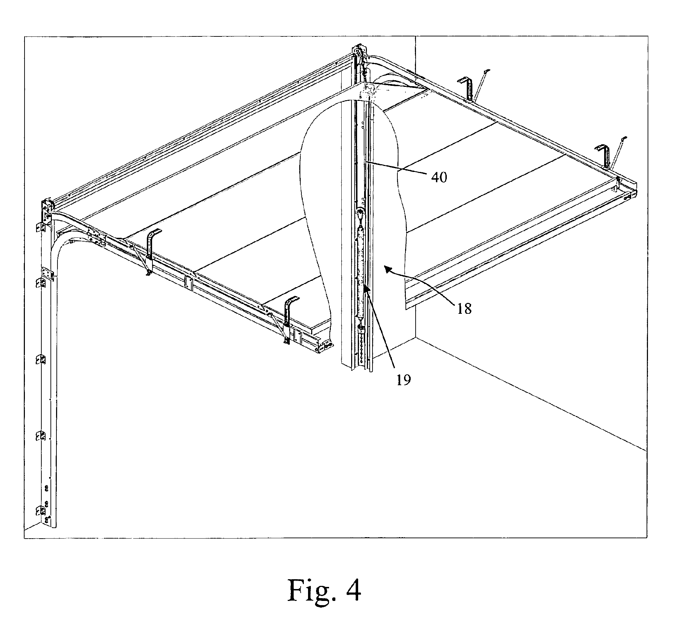

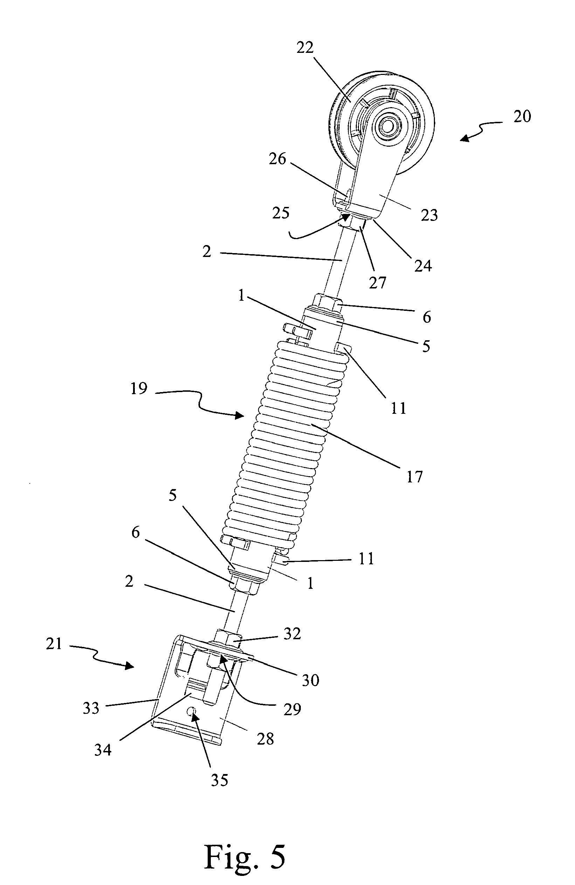

Fig. 4 schematically shows the general view of the claimed overhead doors (with partial cut) supplied with vertically installed balance device 18, the spring mechanism of which is examined in detail in Fig. 5.

The spring mechanism, shown in Fig. 5, is manufactured in the form of a spring cartridge with fixing devices shown in Fig. 1 - Fig. 3, marked with general position 19, one end of which is connected with the movable transmission unit 20, and the other end is connected with the tension regulation unit 21. The end section 8 having the smaller dimensions of cross-section (in this case having the smaller diameter) of the central axial element 2 of one fixing device being connected with the movable transmission unit positioned at the top 20, and the end section 8 having the smaller dimensions of cross-section (in this case having the smaller diameter) of the central axial element 2 of one fixing device being connected with the tension regulation unit 21 positioned at the bottom.

The movable transmission unit 20 as it is shown in Fig. 5 comprises a pulley 22, positioned on U-shaped bracket 23 which has an installation aperture 25 on the strap 24 and which is connected with the end section 8 having the smaller dimensions of cross-section of the central axial element 2 of the corresponding fixing device. The end section 8 in positioned in the installation aperture 25 and fixed in this form of implementation with a nut 26 and a lock-nut 27 installed on the end section with the thread 8 from the side of the opposite surfaces of the strap of the bracket 23.

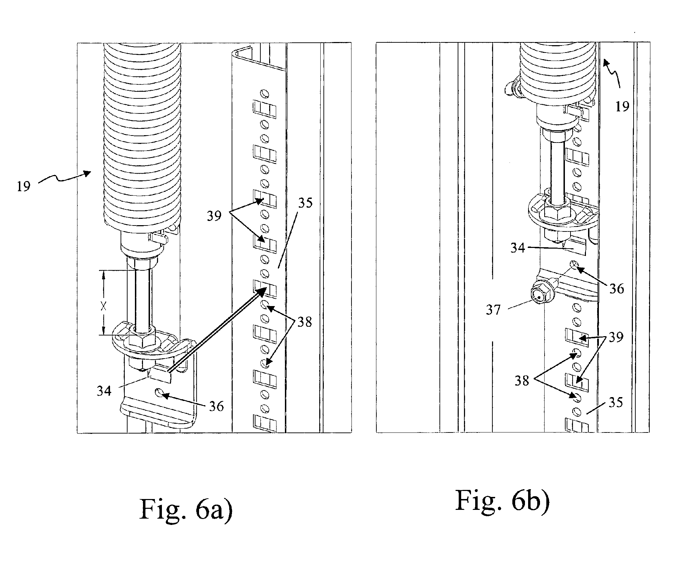

The tension regulation unit 21 is constructed in this form of implementation as a bracket 28 of L-shaped form. One of the webs 29 of the bracket has an installation aperture 30. The bracket 28 is connected with the end section 8 having the smaller dimensions of cross-section of the central axial element 2 of the corresponding fixing device. The end section 8 in positioned in the installation aperture 30 and fixed in this form of implementation with 31 a nut and a lock-nut 32 installed on the end section 8 with the thread from the side of the opposite surfaces of the web 29 with the installation aperture 30. The second web 33 of the bracket 28 is positioned parallel to the axis 4 of the central axial element 2 of the fixing device and has one hook end 34 positioned from the side of the laid-on plate 35 (see Fig. 6a)-6)) and one aperture 36 for fixing elements (for example, self-cut 37), corresponding to one aperture 38 for fixing elements made in the laid-on plate 35. In the laid-on plate 35 there are as well fixing apertures 39 for installation of the hook ends on them 34.

Fig. 6a) schematically shows in the expanded scale the fragment of the balance device 18 according to Fig. 4 before the fixing of the hook end 34 of the tension regulation unit 21 in the fixing aperture 39 of the laid-on plate 35.

Fig. 6a) schematically shows in the expanded scale the fragment of the balance device 18 according to Fig. 4 before the fixing of the hook end 34 of the tension regulation unit 21 in the fixing aperture 39 of the laid-on plate 35 with further additional fixing in the chosen position using the self-cut 37 installed into the overlap apertures 36 of the L-shaped bracket and 38 of the laid-on plate 35.

The method of fixing of the end section of the coil spring using the claimed fixing device in general case is performed in the following way.

The fixing device is positioned inside the coil of the spring in its end area. The fixing device consists of at least two fixing elements, each of which has at least one support and one hook end. The fixing device is positioned so that the spring end are limited with the supports of fixing elements and extended perpendicularly to the spring longitudinal axis until the hook ends of the fixing elements are placed between the spring coils, the hook ends expand them and reciprocally fix the positioning of the fixing elements.

In the context of the claimed invention the claimed method may be performed, for example, while assembling of the claimed spring cartridge using the claimed fixing device the fixing is performed in the following way (see Fig. 3).

The coil tension spring of the smaller diameter 16 is put into the coil tension spring 17 of the bigger diameter. The springs 16 and 17 have the opposite winding. Inside the body 1 fixing elements 3 are put so that the supports 11 of the fixing elements 3 overhang the external surface of the body 1 through the corresponding apertures 15. Inside the body 1 with the fixing elements 3 the central axial element 2 is put from the side of its end section 8 having the smaller diameter. The hook ends 12 and 13 of the fixing elements 3 are placed in the area of the corresponding apertures 14 and can even overhang the external surface of the body 1. On the body end 1 from the side of the end section 8 having the smaller diameter the bearing cap 5 is installed. On the thread of the end section 8 having the smaller diameter of the central axial element 2 the nut 6 is installed. The fixing device in such a semi-assembled state is placed inside the coil spring 16 having the smaller diameter (the coil spring 17 having the bigger diameter is positioned coaxially to the other one from outside), so that the ends of the springs 16, 17 are rested on the supports 11 of the fixing elements 3. Then one starts to twist the nut 6, which moving along the thread of the end section 8 having the smaller diameter of the central axial element, starts to pull in the central part 7 and the end section 9 having the bigger diameter of the central axial element inside the body 1. When the central part 7 of the central axial element starts to be pulled into the body 1, the dimensions of cross-section of which in the direction of the axis 4 of the central axial element 2 in general change according to the linear law, and in the reviewed case the central part 7 has a shape of a truncated cone, the fixing elements 3 start to extend slowly and gradually in the direction perpendicularly to the longitudinal axis of the spring (i.e. axis of the central axial element 2) until the hook ends 12 of the fixing elements 3 overhang above the coils of the external spring 17 having the bigger diameter, and the hook ends 13 overhang above the coils of the internal spring 16 having the smaller diameter, extending the coils. The final (axis) position of the fixing element is achieved when the support 10 reaches the open end of the body 1. At the same time the position of the central axial element 2, and therefore, the position of the fixing elements 3 in the direction perpendicularly to the longitudinal axis of the spring 4, in the body 1 from the side of the second end is fixed with the nut 6, rested on the bearing cap 5. In this position the hook ends 12 and 13, overhanging through the coils of the springs 17 and 16, respectively, reliably hold the end sections of the springs 17 and 16, respectively, even in case of considerable tension efforts taken to the end sections of the springs 17 and 16.

If required the dismantling of the spring cartridge is performed in the reverse sequence until the required stage of dismantling by unscrewing the nut 6.

As it has been stated before the spring cartridge can be efficiently used in particular in spring mechanisms balancing the devices included into the set of overhead sectional doors.

Being a part of the overhead sectional doors the claimed spring cartridge 19 installed in the claimed way using the claimed fixing device performs a function of a device for regulation of rope tension 40 in the following way.

On the end section 8 having the smaller diameter of the central axial element 2 of one fixing device the lock-nut 27 is installed. The end section 8 having the smaller diameter of the central axial element 2 then is placed in the installation aperture 25 in the strap 24 of the U-shaped bracket 23 with the pulley 22 installed on it, then the nut 26 is firmly installed thus forming on this end section 8 the moving transmission unit 20.

On the end section 8 having the smaller diameter of the central axial element 2 of the second fixing device the lock-nut 32 is installed The end section 8 having the smaller diameter of the central axial element 2 then is placed in the installation aperture 30 in the web 29 of the L-shaped bracket 28 with the hook end 34 made on the second web 33, then the nut 31 is firmly installed thus forming on this end section 8 the tension regulation unit 21.

While mounting the balancing device through the pulley 22 the rope 40 is laid. The hook end 34 of the L-shaped bracket 28 is placed in the fixing aperture 39 of the laid-on plate 35, the positioning of which is chosen taking into account the required level of tension which should be provided with the spring cartridge 19. Then in the corresponding combined apertures 36 and 38 under the fixing details in the L-shaped bracket 33 and the laid-on plate 35, respectively, the self-cuts 37 are installed, then the chosen position is fixed providing the required tension. If required, for example, if the springs 16 and 17 are considerably stretched in the spring cartridge 19 in the process of operation the required tension may be achieved with the reinstallation of the hook end 34 of L-shaped bracket 33 in another fixing aperture 36 of the laid-on plate 35. To do it the self-cut 37 is unscrewed, the hook end 34 is reinstalled in the fixing aperture 36 positioned lower and the self-cut 37 is installed again in the combined apertures 36 and 38 for fixing details.

More accurate regulation can be performed through the changing the position of the nut 32 and the lock-nut 31 at the end section 8 of the central axial element 2 of the corresponding (bottom) fixing device, thus the parameter «X» is changed as it is shown in Fig. 6a).

Information sources
1. Inventor's certificate SU No. 1479756, published 15.05.1989.
2. Patent RU No. 2362059 C2, published 27.01.2006.
3. Inventor's certificate SU No. 846878, published 15.07.1981.
4. Patent BY No. 3643 C1, published 30.12.2000.

## Claims

1. A method of fixing the coil spring end section whereby the fixing device is freely positioned inside the coil of the spring in its end section area, the fixing device comprising at least two fixing elements, each of which is supplied with at least one support and at least one hook end so that the spring end position could be fixed with the supports of the fixing elements and extended perpendicularly to the spring longitudinal axis until the hook ends of the fixing elements project between the spring coils, expanding them with the subsequent fixation of the relative position of the fixing elements.

2. A fixing device of the end section of the spring constructed as a composite device and including a hollow and open from both ends body, the maximum size of the cross-section of which is less than internal diameter of the spring, a central axial element comprising the central part, the dimensions of the cross-section of which in the direction of the axis of the central axial element are changing according to the linear law, and two end sections having constant cross-section, one of which has the less dimensions of cross-section, corresponding to the dimensions of the smallest cross-section of the central part and the other has the bigger dimensions of cross-section, corresponding to the dimensions of the biggest cross-section of the central part, and an end support positioned from the side of the end section having the bigger dimensions of cross-section and constructed being capable of abutting in working position against the open end of the body, the total length of the section having the bigger dimensions of cross-section and the central part of the central axial element correspond to the body length, at least two fixing elements, each representing a plate stretched in the direction of the central axial element axis, a bearing cap constructed with the possibility of installation on the open end of the body from the opposite side to the end support of the central axial element, and an element of regulation and fixation of the axial position of the central axial element in the body cavity, a number of the fixing elements and their width being chosen with the possibility of at least partial overlap of the central axial element surface in the end section area having the bigger dimensions of cross-section, on the external surface of each fixing element at least one support and at least one hook end overhanging the external surface are placed, and the apertures the shape, size and position of which are chosen to make possible placing in them the supports and the hook ends of the fixing elements are made in the hollow body, the shape and area of the end section having the bigger dimensions of cross-section of the central axial element and the height of the supports and hook ends of the fixing elements being chosen to make possible projection of the supports and hook ends of the fixing element in the working position through the corresponding apertures in the body beyond the external surface of the body and to make possible interconnection of the hook ends and spring coils.

3. The fixing device of the spring end sections in the spring cartridge comprising coaxially positioned internal and external springs constructed as a composite device and including a hollow and open from both ends body, the maximum size of the cross-section end of which is less than internal diameter of the spring, a central axial element comprising the central part, the dimensions of the cross-section of which in the direction of the axis of the central axial element are changing according to the linear law, and two end sections having constant cross-section, one of which has the less dimensions of cross-section, corresponding to the dimensions of the smallest cross-section of the central part and the other has the bigger size of cross-section, corresponding to the dimensions of the biggest cross-section of the central part, and end support positioned from the side of the end section having the bigger dimensions of cross-section and constructed being capable of abutting in working position against the open end of the body, the total length of the section having the bigger dimensions of cross-section and the central part of the central axial element correspond to the body length, at least two fixing elements, each representing a plate stretched in the direction of the central axial element axis, a bearing cap constructed with the possibility of installation on the open end from the opposite side to the end support of the central axial element, and an element of regulation and fixation of the axial position of the central axial element in the body cavity, a number of the fixing elements and their width being chosen with the possibility of at least partial overlap of the central axial element surface in the end section area having the bigger dimensions of cross-section, on the external surface of each fixing element at least one support and at least one pair of the hook ends of different height overhanging the external surface are placed, the higher hook end being placed closer to the support in the lengthwise direction than the smaller hook end, and the apertures, the shape, size and position of which are chosen to make possible placing in them the supports and hook ends of the fixing elements are made in the hollow body, the shape and area of the end section having the bigger dimensions of cross-section of the central axial element and the height of the supports and hook ends of the fixing elements being chosen to make possible projection of the supports and hook ends of the fixing element in the working position through the corresponding apertures in the body beyond the external surface of the body and to make possible interconnection of the higher hook ends with the coils of the external spring and the smaller hook ends with the coils of the internal spring.

4. The fixing device according to one of Claims 1 or 2, **characterized in that** the body and the central axial element on the central and both end sections have round cross-section, the plate of each fixing element, if necessary, being made bent in the cross direction, and the bending radius preferably corresponding to the radius of cross-section of the end section having the bigger dimensions of cross-section of the central axial element.

5. The fixing device according to one of Claims 2 or 3, **characterized in that** the support and a pair of the hook ends of the fixing element are positioned on one lengthwise line.

6. The fixing device according to one of Claims 1 - 4, **characterized in that** the element of regulating and fixing of the axial position of the central axial element in the body cavity is constructed in the form of a nut, the end section having the smaller dimensions of cross-section of the central axial element being supplied with a thread.

7. The fixing device according to one of Claims 2 - 5, **characterized in that** apertures in the body for each pair of the hook ends of the fixing element are made as a common aperture positioned parallel to the axis of the central axial element.

8. The spring cartridge comprising coaxially positioned internal and external springs and two fixing devices of the end sections of the springs **characterized in that** each fixing device of the end sections of the springs includes a hollow and open from both ends body, supplied with the apertures, in the cavity of which there is a central axial element comprising the central part, the dimensions of the cross-section of which in the direction of the axis of the central axial element are changed according to the linear law and two end sections having constant cross-section, one of which has the less dimensions of cross-section, corresponding to the dimensions of the smallest cross-section of the central part and the other has the bigger dimensions of cross-section, corresponding to the dimensions of the biggest cross-section of the central part, and the end support positioned from the side of the end section having the bigger dimensions of cross-section and abutting against the open end of the body, at least two fixing elements installed between the external surface of the end section of the central axial element having the bigger dimensions of cross-section and internal surface of the body, each element represents a plate stretched in the direction of the axis of the central axial element and on its external surface is supplied with at least one support, projecting over external surface and at least one pair of the hook ends of different height which project through the corresponding apertures in the body, the higher hook end in the lengthwise direction being placed closer to the support than the smaller hook end and being positioned between the coils of the external spring, and the smaller hook end being positioned between the coils of the internal spring, the end section having the smaller dimensions of cross-section of the central axial element projecting beyond the body, on the open end of the body from the opposite side to the end support of the central axial element the bearing cap being installed, and at the end section having the smaller dimensions of cross-section of the central axial element an element regulating and fixing of the axial position of the central axial element inside the body and connected with the cap being installed.

9. The cartridge according to Claim 7, **characterized in that** the element of fixing and regulating of the axial position of the central axial element in the body has a form of a nut pressed to the bearing cap, the end section having the smaller dimensions of cross-section of the central axial element is supplied with a thread.

10. The overhead sectional doors, supplied with the balance system comprising at least one spring cartridge of spring mechanism, one end of which is connected with the movable transmission block comprising at least one pulley, and the other end is connected with the tension regulation device, comprising an anchor hook end, constructed with the possibility of its fixation in each aperture in the row positioned in the direction of the spring cartridge extension, **characterized in that** the balancing device is positioned vertically, the spring mechanism comprising the spring cartridge with fixing devices according to any of Claims 1 - 6, in which the end section having the smaller dimensions of cross-section of the central axial element of one fixing device is connected with the movable transmission unit positioned at the top, and the end section having the smaller dimensions of cross-section of the central axial element of the other fixing device is connected with the tension regulation unit positioned at the bottom, and the fixing apertures being made in vertically positioned laid-on plate, supplied with apertures for the fastening members.

11. The sectional doors according to Claim 9, **characterized in that** the movable transmission unit comprises at least one pulley positioned on U-shaped bracket, supplied with an installation aperture made on the strap and connected with the end section having the smaller dimensions of cross-section of the central axial element of the corresponding fixing device by means of placing the end section in the installation aperture with fixation of the end section in the installation aperture by means of a threaded connection, preferably a nut and a lock-nut installed on the end section supplied with the thread from the side of the opposite surfaces of the strap of the bracket.

12. The sectional doors according to one of Claims 9 or 10, **characterized in that** the tension regulation unit is constructed as a bracket, at least as a L-shaped bracket, one of the webs of which has an installation aperture, which is connected with the end section having the smaller dimensions of cross-section of the central axial element of the corresponding fixing device by means of placing the end section in the installation aperture with fixation of the end section in the installation aperture by means of a threaded connection, preferably a nut and a lock-nut installed on the end section supplied with the thread from the side of the opposite surfaces of the web with the installation aperture, the second web of the bracket positioned in plane parallel to the axis of the central axial element of the fixing device being supplied with at least one hook end positioned from the side of the laid-on plate and at least one aperture for the fastening members corresponding to at least to one aperture for the fastening members of the laid-on plate.
